(19) Europäisches Patentamt
European Patent Office
Office européen des brevets

(11) **EP 0 581 023 B1**

(12) **EUROPÄISCHE PATENTSCHRIFT**

(45) Veröffentlichungstag und Bekanntmachung des Hinweises auf die Patenterteilung:
**06.10.1999 Patentblatt 1999/40**

(51) Int Cl.[6]: **G01N 33/48**, G01N 21/75, G01N 33/53, G06F 15/80

(21) Anmeldenummer: **93110183.6**

(22) Anmeldetag: **25.06.1993**

(54) **Verfahren zur Analyse eines Bestandteils einer medizinischen Probe**

Method for analysing a component of a medical sample

Procédé pour l'analyse d'un constituant d'un échantillon médical

(84) Benannte Vertragsstaaten:
**AT BE CH DE DK ES FR GB GR IE IT LI LU NL PT SE**

(30) Priorität: **25.07.1992 DE 4224621**

(43) Veröffentlichungstag der Anmeldung:
**02.02.1994 Patentblatt 1994/05**

(73) Patentinhaber: **Roche Diagnostics GmbH**
**68298 Mannheim (DE)**

(72) Erfinder:
• **Schaefer, Rainer, Dr.**
**D-8000 München 60 (DE)**
• **Molnar, Bela, Dr.**
**HU-1096 Budapest (HU)**
• **Berding, Christoph, Dr.**
**D-8000 München 80 (DE)**
• **Wolf, Peter, Dr.**
**B-8121 Habach (DE)**
• **Lang, Fridl, Dr.**
**D-8132 Tutzing (DE)**

(74) Vertreter: **Pfeifer, Hans-Peter, Dr.,**
**Dr. H.-P. Pfeifer Dr. P. Jany, Patentanwälte**
**Beiertheimer Allee 19**
**76137 Karlsruhe (DE)**

(56) Entgegenhaltungen:
US-A- 4 965 725

• **ANALYTICA CHIMICA ACTA Bd. 248 , 1. März 1991 Seiten 1 - 30 ZUPAN ET AL. 'NEURAL NETWORKS,ETC.'**
• **ANALYTICAL CHEMISTRY Bd. 63, Nr. 20 , 15. Oktober 1991 Seiten 2313 - 2323 GEMPERLINE ET AL. 'NONLINEAR MULTIVARIATE CALIBRATION,ETC.'**
• **'IJCNN-91-SEATTLE VOL.1' 8. Juli 1991 IMPROVED DETECTION OF BIOLOGICAL SUBSTANCES USING A HYBRID NEURAL NETWORK,ETC. (HAM ET AL.) * Seite 227 - Seite 232 ***
• **COMPUTERS & CHEMICAL ENGINEERING Bd. 14, Nr. 4 , 1. Oktober 1990 Seiten 561 - 572 UNGAR ET AL. 'ADAPTIVE NETWORKS FOR FAULT DIAGNOSIS AND PROCESS CONTROL'**
• **MEASUREMENT SCIENCE & TECHNOLOGY Bd. 2 , 1. August 1991 Seiten 464 - 469 SUNDGREN ET AL. 'ARTIFICIAL NEURAL NETWORKS AND GAS SENSOR ARRAYS,ETC.'**
• **ANALYTICAL CHEMISTRY Bd. 62, Nr. 17 , 1. September 1990 Seiten 1791 - 1797 LONG ET AL. 'SPECTROSCOPIC CALIBRATION AND QUANTITATION,ETC.'**

## Beschreibung

Die Erfindung betrifft ein Verfahren zur Analyse eines Bestandteils einer medizinischen Probe mittels eines automatischen Analysegerätes, in welchem eine Reaktion der Probe mit einem Reagenzsystem durchgeführt und eine aus der Reaktion der Probe mit dem Reagenzsystem resultierende physikalisch nachweisbare Meßgröße X gemessen wird. Dabei wird für eine bestimmte Probe mindestens ein Meßwert R bestimmt. Dieser wird in einer Verarbeitungseinheit des Analysegerätes zu einem analytischen Resultat A verarbeitet.

In der medizinischen Laboranalytik sind zahlreiche verschiedene Verfahren zur Bestimmung eines gewünschten Analyseresultates A gebräuchlich, wobei zur Durchführung der Verfahren meist vollautomatische Analysegeräte eingesetzt werden. Die Proben sind in der Regel Körperflüssigkeiten, vor allem Blut und Urin. Sie werden untersucht, um ein analytisches Resultat A bezüglich eines in ihnen enthaltenen Probenbestandteils zu gewinnen.

Das Resultat A ist meist (bei quantitativen Analysen) die Konzentration C des Bestandteils. Bei qualitativen Analysen ist es die Zuordnung der Probe (hinsichtlich des untersuchten Analyten) zu einem medizinisch-analytischen Zustand, beispielsweise die Feststellung, daß das Analyseergebnis positiv bzw. negativ ist. Dabei sind manchmal auch mehr als zwei Zustände gebräuchlich, beispielsweise "erhöht", "normal" und "vermindert". Als analytisches Resultat A im Sinne der Erfindung sind aber auch andere medizinisch bedeutsame Resultate einer Analyse einer medizinischen Probe anzusehen, beispielsweise eine aus der Analyse unmittelbar (d.h. ohne daß ein Konzentrationswert oder ein medizinisch-analytischer Zustand angezeigt wird) ermittelte Aussage über das Vorliegen einer Krankheit. Dies ist zur Zeit noch wenig gebräuchlich. Durch die Erfindung werden insoweit jedoch neue Möglichkeiten geschaffen.

Meßtechnisch ausgedrückt ist das analytische Ergebnis A ein analoger oder logischer Zustand, der aus dem mindestens einen Meßwert R in aller Regel vollautomatisch bestimmt wird und eine medizinisch relevante Information verkörpert.

Die Analyse basiert stets auf der Reaktion der Probe mit einem oder mehreren für die Analyse eines bestimmten Bestandteils der Probe (der meist als "Analyt" oder "Parameter" bezeichnet wird) geeigneten Reagenzien, die insgesamt als Reagenzsystem bezeichnet werden. In dem automatischen Analysegerät werden die Reagenzien gleichzeitig oder in vorbestimmten zeitlichen Abständen mit der Probe vermischt. Einzelheiten der Analyseverfahren sind für die vorliegende Erfindung -abgesehen von speziell angesprochenen Besonderheiten bei einzelnen Ausführungsformen der Erfindung- nicht von Bedeutung.

Als physikalisch nachweisbare Meßgröße gebräuchlich ist beispielsweise die Bestimmung einer Farbänderung mit Hilfe der Photometrie, die Nephelometrie und Turbidimetrie zur Messung der Trübung der Probe, der empfindliche Lichtnachweis mit Hilfe von Photovervielfachern, wenn X ein Fluoreszenzsignal ist, oder die Strom- oder Spannungsmessung für den Fall, daß bei elektrochemischen Tests die Meßgröße X elektrischer Natur ist. Allgemein wird durch ein geeignetes Meßverfahren die physikalisch nachweisbare Meßgröße X erfaßt und mit meßtechnischen Maßnahmen in ein elektrisches Meßsignal umgewandelt. Der gemessene Wert des Meßsignals ist der Meßwert R, der ein eindeutiges Maß der Meßgröße X ist.

Automatische Analysegeräte bestimmen im allgemeinen vollautomatisch ein analytisches Ergebnis A, meistens eine Konzentration C, aus jeweils mindestens einem Meßwert R. Häufig werden an einer Probe mehrere Meßwerte $R_i$ bestimmt, wobei aus jeweils mindestens zwei Meßwerten in der Verarbeitungseinheit eine abgeleitete Variable berechnet wird, die man als Meßresultat bezeichnen kann. In einfachen Fällen läßt sich der Meßwert R bzw. das aus mindestens zwei Meßwerten abgeleitete Meßresultat eindeutig und mit guter Genauigkeit gemäß einem einfachen funktionalen Zusammenhang, der üblicherweise als Kalibrationskurve bezeichnet wird, mit der Konzentration C verknüpfen. Der Meßwert bzw. das Meßresultat bilden dabei die Kalibrations-Eingangsvariable der Kalibrationskurve $Y=f(C)$.

Bei der Auswertung muß stets berücksichtigt werden, daß die Analysereaktionen zeitabhängig sind. Verhältnismäßig einfache Gegebenheiten liegen in der Regel vor, wenn die Reaktion oder die Kette von Reaktionen, die zu der nachweisbaren physikalischen Meßgröße führt, sehr schnell ablaufen. In diesem Fall wird der Meßwert R zu einem Zeitpunkt bestimmt, zu dem die Analysereaktion im wesentlichen abgelaufen ist und unmittelbar als Eingangsvariable Y der Kalibration verwendet wird. Man spricht von einer Endpunktbestimmung.

Ein anderes verhältnismäßig einfaches Beispiel sind Fälle, bei denen eine relativ langsame Reaktion für die zeitliche Änderung der Meßgröße X bestimmend ist und daraus über einen gewissen Zeitraum eine lineare oder zumindest einem einfachen funktionalen Zusammenhang folgende zeitliche Änderung ("Kinetik") der Meßgröße X resultiert. Man mißt die Meßgröße X dabei mehrfach zu unterschiedlichen Meßzeitpunkten $t_i$ innerhalb des erwähnten Zeitraumes. Aus den Meßwerten $R_i(t_i)$ wird ein Meßresultat berechnet, das die Kinetik beschreibt (beispielsweise die Änderung des Meßwertes R pro Zeiteinheit zu einem bestimmten Zeitpunkt $dR/dt(t_i)$) und als Eingangsvariable Y für die Bestimmung des analytischen Resultats A dient.

Häufig ist die zeitliche Änderung der Meßgröße X in sehr komplexer Weise von dem kinetischen Verhalten mehrerer Teilreaktionen abhängig, die bei der Gesamtreaktion des Analysesystems mit der Probe eine Rolle spielen. Hieraus resultiert ein komplexer Verlauf der zeitlichen Änderung der Meßgröße X, der als komplexe Reaktionskinetik bezeichnet wird. Die Erfindung richtet sich insbesondere auf solche Fälle komplexer Reaktionskinetiken.

Für die Auswertung von aus mehreren überlagerten chemischen Kinetiken der Einzelreaktionen resultierenden komplexen Reaktionskinetiken gibt es verschiedene bekannte Lösungsansätze. So kann man versuchen, die komplexe Reaktionskinetik in Form separater Differentialgleichungen für die Teilreaktionen zu beschreiben, wobei die Funktionsparameter der Differentialgleichungen meßbaren reaktionskinetischen Größen entsprechen. Aufgrund der Komplexität des tatsächlichen Reaktionssystems ist man jedoch zu idealisierenden Modellannahmen gezwungen, die den Gültigkeitsbereich der Modellergebnisse einschränken. Aus diesem Grund wurden phänomenologische Modelle vorgeschlagen, bei denen die Funktionsparameter keinen unmittelbaren Bezug zu den Einzelreaktionen haben, häufig jedoch als Maß für eine bestimmte Eigenschaft der zu betrachtenden Reaktion interpretiert werden. Schließlich gibt es rein statistische Modelle zur Beschreibung der Reaktionskinetiken. Jeder dieser Lösungsansätze hat gewisse Vorteile, es ist jedoch jeweils ein hoher Aufwand zur Entwicklung des Modells erforderlich. Dennoch ist die Fähigkeit zur Anpassung an geänderte Voraussetzungen (beispielsweise Änderungen der Reagenzzusammensetzung oder unter Umständen auch nur der Reagenzcharge) gering und die Genauigkeit und Zuverlässigkeit der Auswertung des Meßergebnisses und der Bestimmung des analytischen Ergebnisses daraus läßt zu wünschen übrig.

Die Verarbeitungseinheit des Analysegerätes erfüllt neben der Bestimmung der Konzentration bzw. eines medizinisch analytischen Zustandes aus den gemessenen Meßwerten üblicherweise eine Reihe anderer Aufgaben, die zur Ermittlung eines korrekten analytischen Resultates A beitragen. Hierzu gehören üblicherweise die Plausibilitätsprüfung der Meßwerte, die Identifikation der Produktionscharge der Reagenzien, die Erkennung anderer Reagenz- und Gerätezustände, die Detektion von Fehlern sowie in manchen Fällen die Korrelation von unterschiedlichen an einer Probe gewonnenen Meßdaten oder von Meßdaten mehrerer Proben. Die Erfindung bezieht sich auch auf solche ergänzende Aufgaben der Verarbeitungseinheit.

Der Erfindung liegt die Aufgabe zugrunde, ein Verfahren der eingangs bezeichneten Art mit verbesserter Qualität und Zuverlässigkeit zur Verfügung zu stellen.

Die Aufgabe wird durch das in Anspruch 1 angegebene Verfahren gelöst. Bei dem Verarbeitungsschritt werden die Ergebnisse eines Neural Net-Trainings verwendet, bei welchem für eine Mehrzahl von Proben, für die das analytische Resultat A bekannt ist, mindestens ein Meßwert oder eine aus mehreren Meßwerten nach vorbestimmten Verfahren abgeleitetes Meßresultat an den Input eines Neural Net angelegt werden. Bevorzugt wird dabei jeweils das analytische Resultat A oder eine bekannte, mit dem analytischen Resultat verknüpfte Hilfsgröße an den Output des Neural Net angelegt. Dies ist jedoch nicht in allen Fällen erforderlich. Im Rahmen der Erfindung wurden auch selbstorganisierende Neural Nets (SOM = Self Organizing Map) erfolgreich verwendet, bei denen das Training ohne Überwachung stattfindet ("nonsupervised learning").

Neural Nets werden in der deutschsprachigen Literatur häufig auch als neuronale Netze bezeichnet. Ein Neural Net ist ein weitgehend parallel organisiertes Datenverarbeitungssystem. Es besteht aus einem Netzwerk von Verarbeitungselementen (processing elements), die auch als Neuronen bezeichnet werden und durch interneuronale Verbindungen (interconnects) miteinander verbunden sind. Jedes Neuron hat einen oder mehrere Eingänge, die nachfolgend als Inputs bezeichnet werden und erzeugt ein Ausgangssignal an seinem Output. Das Ausgangssignal wird in mehrere Kopien aufgeteilt und als Eingangssignal an die Inputs derjenigen Neuronen angelegt, die mit dem Output verbunden sind. Die gespeicherte Information besteht bei einem Neural Net in den "Wichtungen" der interneuralen Verbindungen einschließlich den in der Lernphase ermittelten Grundpotentialen der Neuronen.

Ein Neuron j kann innerhalb des Netzwerkes mehrere gewichtete Inputs haben, z.B. von den Neuronen 1, ..., i. Mit $w_{ij}$ werden die Wichtungen der interneuronalen Verbindungen und mit $x_i$ die Outputs der vorgeschalteten Neuronen bezeichnet. Es sind positive und negative Wichtungen (Verstärkung und Inhibition) möglich. Der Nettoinput $net_j$ beträgt dann

$$net_j = \sum_i w_{ij} * x_i$$

Zum Nettoinput eines Neurons kann ein externer Input $exinp_j$ hinzukommen. Die Neuronen eines Netzes berechnen jeweils parallel (jedoch asynchron) aus ihrem alten Aktivationszustand $a_j(t)$ und einer Aktivierungsfunktion $F_j$ einen neuen Aktivationszustand $a_j(t+1)$

$$a_j(t+1) = F_j(net_j\,(t+1),\, exinp_j\,(t+1),\, a_j(t))$$

Meist entspricht der Ausgabezustand $o_j$ dem (inneren) Aktivationszustand $a_j(t+1)$. In einigen Fällen erfolgt jedoch ein weiterer Transformationsschritt unter Anwendung einer Ausgabefunktion $f_j$.

$$o_j(t+1) = f_j(a_j(t+1))$$

Verschiedene Neural Nets (nachfolgend als "NN" abgekürzt) unterscheiden sich hinsichtlich ihrer Topologie, d.h. der Anordnung der Neuronen und der interneuronalen Verbindungen im Netz. Die Neuronen bilden üblicherweise Schichten (layers), wobei jedes NN mindestens eine Eingangsschicht (input layer) und eine Ausgangsschicht (output layer) hat. Die Inputs der Neuronen der Eingangsschicht bilden insgesamt den Input des NN, während die Outputs der Neuronen der Ausgangsschicht insgesamt den Output des NN bilden. Zwischen der Eingangsschicht und der Ausgangsschicht können weitere sogenannte verborgene Schichten (hidden layers) angeordnet sein. Die Struktur (Topologie) eines NN wird durch die Anzahl der Schichten, die Anzahl der Neuronen je Schicht und die vorhandenen interneuronalen Verbindungen bestimmt.

Ein Charakteristikum der NN's ist, daß sie "lernen" können. Hierzu wird ein Neural Net-Training durchgeführt. In der Praxis werden NN's hauptsächlich für Zwecke der Bildverarbeitung eingesetzt, wobei es darum geht, bestimmte Bildmuster wiederzuerkennen. Beim Training des NN werden an den Input mit einer Videokamera erzeugte Bildsignale bestimmter Muster (beispielsweise Kreis, Quadrat etc.) angelegt, während an den Output des NN ein Signal angelegt wird, welches der gewünschten korrekten Erkennung entspricht. Wenn das NN für die Aufgabenstellung geeignet ausgewählt und konfiguriert ist und der Lernvorgang häufig genug wiederholt wird, ist das NN in der Lage, unbekannte Gegenstände auch dann zu klassieren, d.h. einer der erlernten Gruppen zuzuordnen, wenn das Bild nicht exakt dem erlernten Muster entspricht. Basisleistungen bekannter NN's sind daher die Musterassoziation und die Musterrekonstruktion.

Die Funktion eines bestimmten NN ist neben seiner Topologie auch durch die Algorithmen (Abbildungsvorschriften) bestimmt, die zu der Verarbeitung der am Input anliegenden Signale zu den Output-Signalen und zu der in dem Lernprozeß erfolgenden Adaption der Wichtungen der interneuronalen Verbindungen verwendet werden. Es sind dies insbesondere die Aktivierungsfunktion, die die Erzeugung des Output der einzelnen Neuronen aus der erwähnten Produktsumme bestimmt, die Ausgabefunktionen und die Algorithmen, die für den Lernprozeß verwendet und üblicherweise als Propagierungsfunktionen bezeichnet werden.

Wesentliche Eigenschaften von Neural Nets sind u.a. folgende:

1. Sie bestehen aus sehr einfachen Verarbeitungseinheiten, die jeweils ihre einfache Operation (Signalaufnahme, Summation der Eingangssignale, Transformation der summierten Eingänge und Weitergabe von Signalen) ausführen. Die Aufgabe jedes Neurons beschränkt sich also darauf, über die an seinem Input angeschlossenen interneuronalen Verbindungsleitungen Eingangssignale aufzunehmen, durch die erwähnte Berechnung ein Ausgangssignal zu erzeugen und an seinem Output bereitzustellen. Diese Schritte werden von den Neuronen parallel durchgeführt.

2. Die spezifische Information steckt neben der Topologie und den Grundpotentialen der Neutronen in den Wichtungen der Verbindungen. Unterschiedliche NN-Typen unterscheiden sich bezüglich der Regeln, aufgrund deren die Wichtungen festgelegt und während des Lernprozesses modifiziert werden.

3. Ein NN hat die Fähigkeit, die in dem Training gemachten "Erfahrungen" selbständig in einen vollständigen Satz der Wichtungen ("Wichtungsmatrix") umzusetzen.

Während des Trainingsprozesses werden in den meisten Fällen ausschließlich die Wichtungen variiert, d.h. die Topologie des NN bleibt unverändert. In Ausnahmefällen werden jedoch auch die erwähnten selbstorganisierende Netze (SOM) eingesetzt.

SOM's sind Modelle neuronaler Netzwerke, die die Fähigkeit des Gehirns zur Selbstorganisation nachahmen und ihre Verbindungsstruktur gemäß einfachen Regeln selbst organisieren. Die "selbstorganisierende Karte" wird von einer inneren Neuronenschicht gebildet, die von Neuronen einer Eingangsschicht Signale erhält. Die innere Schicht wird als Kartenschicht bezeichnete. Jedes Neuron der Eingangsschicht steht mit jedem Neuron der Kartenschicht in Verbindung. Für jedes Eingabesignal konzentriert sich die Erregung auf einen Teil der Neuronen der Kartenschicht. Am Ende der Lernphase steht die Position der am stärksten erregten Neuronen auf der Karte mit markanten Merkmalen der Input-Signale in Beziehung, wobei ähnliche Input-Signale zu benachbarten Erregungsorten auf der Karte führen. Mit anderen Worten stellt die Karte ein räumliches Abbild charakteristischer Merkmale der Input-Signale dar.

Das mathematische Modell eines solchen selbstorganisierenden Prozesses wurde von T. Kohonen formuliert. Es wird deshalb auch als "Kohonen-feature-map" bezeichnet.

Weitere Einzelheiten über neuronale Netze sind der einschlägigen Literatur zu entnehmen. Verwiesen sei insbesondere auf das Buch "Neuronale Netze, Grundlagen und Anwendung" von Klaus-Peter Kratzer, Carl Hanser Verlag, München, Wien 1990 sowie auf das US-Patent 4 965 725, in welchem die Funktion der NN im Zusammenhang mit der Erkennung maligner Zellstrukturen in mikroskopischen Bildern von cytologischen Proben erläutert wird. Dieses Patent enthält auch eine umfangreiche Auflistung einschlägiger Literatur.

Grundlegende Forschungsergebnisse über neuronaler Netze wurden bereits in den 50iger Jahren publiziert. Seit Beginn der 80iger Jahre haben sie für Anwendungsgebiete, bei denen es um Bildverarbeitung und verwandte Aufgaben der Erkennung und Klassierung von Datenmustern geht, zunehmende Verbreitung gefunden.

Ein Überblick über die Anwendung neuronaler Netze in der Chemie wird in dem Artikel "Neural networks: A new method for solving chemical problems or just a passing phase?" von J. Zupan und J. Gasteiger, "Analytica Chimica Acta 248, 1 - 30 (1991) gegeben. Soweit es sich dabei um analytische Problemstellungen handelt, beziehen sich diese auf folgende Anwendungsfälle:

- Es werden spektroskopische Daten (Spektren im UV, im sichtbaren Bereich und im IR-Bereich) ausgewertet; vgl. P.J. Gemperline et al. "Nonlinear Multivariate Calibration Using Principal Components Regression and Artificial Neural Networks" Anal. Chem. 63, 2313 - 2323 (1991) und J. Zupan "Can an instrument learn from experiments done by itself?" Analytica Chimica Acta 235, 53-63 (1990).

- Es werden die Signale einer aus mehreren elektronischen Detektoren (insbesondere ionenselektiven Elektroden und Gassensoren) bestehenden Anordnung mit Hilfe eines neuronalen Netzes ausgewertet; vgl. K.C. Persaud "Electronic gas and odour detectors that mimic chemoreception in animals", trends in analytical chemistry, 11, 61-67 (1992) und M. Bos et al. "Processing of signals from an ion-selective electrode array by a neural network", Analytical Chimica Acta 233, 31-39 (1990).

Die Stärke klassischer Computersysteme besteht darin, eine vorbestimmte Folge von genau definierten Befehlen (Algorithmus) sehr genau und schnell auszuführen. Der Algorithmus kann dabei sowohl eine Rechenaufgabe, als auch eine organisatorische Aufgabe oder logische Verknüpfung betreffen. In dieser Hinsicht sind Computer dem menschlichen Gehirn weit überlegen.

Schwierigkeiten haben die bekannten konventionellen Computer jedoch bei Aufgaben, die nicht durch Befolgung vorher exakt festgelegter Regeln gelöst werden können, sondern assoziative Fähigkeiten erfordern. Sie sind dem menschlichen Gehirn deshalb bei nicht-algorithmischen Aufgaben, wie beispielsweise der Mustererkennung oder Klassifikationsaufgaben weit unterlegen. Für solche Aufgaben eignen sich NN-Systeme. Der Schwerpunkt der bisherigen Anwendungen von neuronalen Netzen (auch soweit sie, wie erwähnt, auf chemischem Gebiet eingesetzt wurden) liegt deshalb bei Aufgabenstellungen, bei denen es um assoziierende, klassierende oder beurteilende Aufgaben geht. Ein Nachteil der neuronalen Netze wird dagegen darin gesehen, daß sie auf Einsatzbereiche mit hoher Toleranz gegenüber Fehlern und eingeschränkten Qualitätsanforderungen hinsichtlich der Ergebnisse beschränkt sind.

Die Analyse medizinischer Proben mit Hilfe von automatischen Analysegeräten ist dagegen ein Gebiet, auf dem wegen der Bedeutung für die Gesundheit der Patienten hohe Qualitätsanforderuungen an die Ergebnisse zu stellen sind. Trotz dieses scheinbaren Gegensatzes wurde im Rahmen der Erfindung festgestellt, daß auch auf diesem Gebiet mit dem Einsatz neuronaler Netze hervorragende Ergebnisse erzielt werden können.

Dabei werden in einer Trainingsphase, die hier auch als Trainingsschritt des erfindungsgemäßen Verfahrens bezeichnet wird, für eine ausreichend große Zahl von Proben, für die das analytische Resultat A bekannt ist, an den Input des NN als Eingangsvariable mindestens ein Meßwert bzw. mindestens ein aus mehreren Meßwerten abgeleitetes Meßresultat und bei den meisten Anwendungen an den Output des NN das analytische Resultat A oder eine bekannte, mit diesem verknüpfte Hilfsgröße angelegt.

Ein abgeleitetes Meßresultat in diesem Sinne ist eine Größe, die aus mehreren Meßwerten nach einem vorbestimmten, definierten Algorithmus (den man als Ableitverfahren bezeichnen kann) abgeleitet wird. Beispiele sind die Steigung, die Krümmung oder die Rauhigkeit einer Kinetik R(t), die nach bestimmten (bekannten) Näherungsformeln aus zu unterschiedlichen Zeitpunkten gemessenen Meßwerten $R_i(t_i)$ berechnet werden.

Eine Hilfsgröße in diesem Sinne kann ein Zahlenwert oder ein logischer Wert sein, der mit dem analytischen Resultat verknüpft ist und in der Regel dazu dient, die Qualität des analytischen Resultates A zu verbessern. Ein wichtiges Beispiel ist ein Fehlercode, der anzeigt, ob die am Input des NN anliegenden Meßwerte oder Meßresultate Hinweise auf das Vorliegen eines Fehler enthalten.

Um die Eingangsvariablen an den Input des NN anzupassen, werden sie normiert, wobei zweckmäßigerweise der höchste vorkommende Meßwert gleich Eins gesetzt wird.

Unter Umständen kann es zweckmäßig sein, als zusätzliche Eingangsvariable bei dem Trainingsschritt Informationen über den Zustand des Gerätes oder von Reagenzien an den Input des NN anzulegen. Hierzu gehören beispielsweise die Umgebungstemperatur, das Alter der Reagenzien, Absorptionseigenschaften der Reagenzien etc.. Die Verwendung eines NN ermöglicht es demzufolge, zusätzlich zu den Meßwerten und daraus abgeleiteten Meßresultaten auch Informationen bei der Bestimmung des analytischen Resultates A zu verwenden, die mit klassischen Auswertealgorithmen in aller Regel nicht berücksichtigt werden konnten.

In der Praxis werden Neural Nets zur Zeit überwiegend als Software-Simulationen für sequenziell arbeitende Computer ("von Neumann-Architektur") implementiert. Bei der Erprobung der vorliegenden Erfindung wurden solche NN-Simulationen erfolgreich eingesetzt. Es ist davon auszugehen, daß mit speziellen Hardware-Komponenten, die die Verarbeitung von NN-Aufgaben durch eine Parallelverarbeitung unterstützen, mit gleichen oder besseren Ergebnissen gearbeitet werden kann.

Das NN-Training erfolgt im allgemeinen überwacht, d.h. die Struktur der Neuronenschichten und der interneuronalen Verbindungen (Topologie) des Netzwerkes wird vorab festgelegt. Während des Trainings kommen ebenfalls vorab festgelegte Propagierungs-, Aktivierungs- und Ausgabefunktionen zur Anwendung. Der Verlauf des Trainings kann durch eine Reihe von Parametern, wie Lernrate, Momentum und Rauschfaktor beeinflußt werden. Das Verfahren des künstlichen Verrauschens des Inputs trägt der realen Situation Rechnung, daß die Bestimmung von Meßgrößen experimentellen Fehlern unterliegt. Dabei werden den Inputwerten Rauschanteile überlagert, die mittels eines Zufalls-Generators aus einer zuvor festgelegten Verteilung und einer Maximal-Amplitude berechnet werden.

Zur Bewertung des Lernerfolgs sind verschiedene Methoden bekannt. Im Rahmen der Erfindung wurde insbesondere die Crossvalidierungs-Methode verwendet, d.h. aus einem Gesamtvorrat (Pool) von Sätzen (Sets) der Eingangsvariablen des NN mit bekanntem Output wird jeweils eine Teilmenge (Subset) zum Training verwendet, und die übrigen Daten des Pools werden zum anschließenden Test des NN auf richtige Outputs benutzt. Die Trainings-Subsets werden dabei sequentiell "durchpermutiert". Bewertet wird die Anzahl der richtigen und falschen Outputs. In einigen einfachen Fällen kann das Ende des Trainings durch Unterschreiten des Wertes einer in der Neuralnet-Software vorgesehenen und berechneten Fehlerfunktion oder durch Erreichen einer bestimmten Qualität oder Stabilität der Zuordnung zwischen Input und Output definiert werden.

In manchen Fällen kann es auch zweckmäßig sein, statt des beschriebenen überwachten Lernens die erwähnten selbstorganisierende Netze (SOM) einzusetzen. Dabei werden -im Gegensatz zu einem klassischen NN- in dem Trainingsschritt, bei welchem jeweils Meßwerte oder daraus abgeleitete Meßresultate am Eingang des NN anliegen, nicht jeweils zugleich analytische Resultate oder damit verknüpfte Hilfsgrößen an dessen Ausgang angelegt. Vielmehr erkennt das SOM charakteristische Strukturen in den an seinem Eingang angelegten Signalen und ordnet sie Positionen in seiner Kartenschicht zu. Im Rahmen der Erfindung wurde festgestellt, daß bei bestimmten Anwendungen auf automatischen Analysegeräten dieses "nonsupervised learning" mit Hilfe eines SOM vorteilhaft ist. Die nachfolgenden Erläuterungen beziehen sich jedoch im wesentlichen (soweit nichts anderes angegeben wird) auf das "supervised learning" mit Hilfe eines klassischen NN.

Nach Abschluß des Trainingsschritts steht eine bestimmte Netzwerktopologie und eine Matrix der Wichtungen fest. Das Ergebnis des Trainings läßt sich also in Form von Parametern der (vorab gewählten oder selbstorganisierend gefundenen) Netzwerktopologie und als Wichtungsmatrix quantitativ ausdrücken. Charakteristisch für die vorliegende Erfindung ist, daß ein solches Ergebnis bei dem erfindungsgemäßen Analyseverfahren verwendet wird.

Das für die Erfindung erforderliche Training eines neuronalen Netzes kann sowohl beim Produzenten des für die Analyse verwendeten Reagenzsystems, als auch an dem automatischen Analysegerät selbst (mit Hilfe eines integrierten oder mit dem Gerät verbundenen NN-Systems), durchgeführt werden. In dem erstgenannten Fall steht eine besonders große Datenbasis (z.B. aus der Entwicklung und Erprobung des Tests sowie aus der Qualitätskontrolle, die jeweils mit Hilfe einer Vielzahl von Proben bekannter Konzentration durchgeführt werden) als Trainingsbasis für das neuronale Netz zur Verfügung. Das Training auf dem Analysegerät hat den Vorteil, daß für das jeweilige Gerät bzw. dessen Einstellungen spezifische Faktoren sowie evtl. systematische Meßfehler berücksichtigt werden können. Als besonders vorteilhaft hat sich eine Kombination von zwei Teilstufen des NN-Trainings erwiesen, bei der die erste Teilstufe, die zu einer weitgehenden Adaption des NN führt, vom Hersteller des Reagenzsystems durchgeführt wird, während die zweite Teilstufe als Nachtraining an dem Analysegerät durchgeführt wird, um gerätespezifische Faktoren zu berücksichtigen.

Aus den vorstehenden Erläuterungen wird deutlich, daß ein Trainingsschritt nicht bei jeder einzelnen Analyse erforderlich ist, sondern es ausreicht, wenn mindestens einmal ein NN-Training im Zusammenhang mit der Entwicklung des Tests (d.h. des Reagenzsystems und dessen Anwendungsvorschrift) durchgeführt wurde. Vielfach ist es jedoch vorteilhaft, zumindest für jede Herstellungscharge des Reagenzsystems ein NN-Training durchzuführen und dieses möglicherweise noch durch zusätzliche Nachtrainingschritte auf dem Analysegerät zu ergänzen.

Aus der Netzwerktopologie, den verwendeten Funktionen sowie den in der Lernphase optimierten interneuronalen Wichtungskoeffizienten und Neuronen-Grundpotentialen lassen sich nach Abschluß des Trainings aus experimentellen Eingangsvariablen (Meßwerten oder Meßresultaten) unbekannte Outputs berechnen. Dieses Ergebnis des NN-Trainings wird erfindungsgemäß für die Analyse eingesetzt. Dies kann grundsätzlich in der Weise geschehen, daß bei der Analyse für eine Probe, für die das analytische Resultat A nicht bekannt ist, genau die gleichen Eingangsvariablen (Meßwerte bzw. daraus nach dem gleichen Verfahren wie bei dem Trainingsschritt abgeleitete Meßresultate) an den Input des optimierten neuronalen Netzes angelegt und unter Verwendung der in dem Training bestimmten Wichtungsmatrix das analytische Resultat A bzw. die in dem NN-Training verwendete Hilfsgröße am Output des NN erzeugt wird. Dieses Verfahren ist allerdings verhältnismäßig aufwendig.

Manche NN-Simulationsprogramme haben spezielle Module, die es ermöglichen, nach Abschluß des NN-Trainings für die Verwertung der Ergebnisse eigenständige Programme zu entwickeln, die die Netzwerkparameter und die optimierte Wichtungsmatrix als Konstanten enthalten und eine ökonomische Verarbeitung der Input-Werte zu den Output-Werten ermöglichen.

Insbesondere richtet sich das Verfahren der Erfindung auf Anwendungsfälle, bei denen mehrere Meßsignale $R_i$ der gleichen physikalisch nachweisbaren Meßgröße X zu unterschiedlichen Meßzeitpunkten $t_i$ gemessen werden, so daß sie insgesamt eine zeitabhängige Änderung der Meßgröße X (Kinetik) beschreiben. In diesem Falle können mehrere (nacheinander bestimmte) Meßwerte $R_i$ abgespeichert und bei dem Training gleichzeitig an den Input des NN angelegt werden, so daß die gesamte über die Kinetik vorliegende Information in einem Lernzyklus des NN verarbeitet werden kann. Stattdessen oder zusätzlich können gemäß einer weiteren bevorzugten Ausführungsform der Erfindung abgeleitete Meßresultate an den Input des NN angelegt werden, die aus Meßwerten berechnet wurde, welche zu unterschiedlichen Meßzeitpunkten gemessen wurden. Solche aus Kinetiken abgeleitete Meßresultate sind beispielsweise Kurvensteigungen oder Krümmungen, sowie Lagen von Extremwerten oder Wendepunkten der zeitabhängigen Änderung des Meßwertes R(t). Selbstverständlich können diese beiden bevorzugten Maßnahmen kombiniert werden, so daß an dem Input des NN gleichzeitig Meßwerte $R_i(t_i)$ und hieraus abgeleitete Meßresultate, wie Kurvensteigungen oder Krümmungen, anliegen.

Bei Analysen, die auf der Messung von Reaktionskinetiken basieren, hat das Verfahren der Erfindung besondere Vorteile. Es wurde festgestellt, daß es möglich ist, Systeme, die aufgrund ihrer Komplexität einer mathematisch-analytischen Lösung nicht zugänglich sind, mit ausreichender Sicherheit zu beschreiben. Außerdem ergibt sich bei kinetischen Bestimmungen durch Auswertung von Teilbereichen der Kinetik eine Möglichkeit zur Verkürzung von Reaktionszeiten (d.h. es muß keine weitgehende Annäherung an das Reaktionsende abgewartet werden), was insbesondere bei immmunchemischen Tests von großer Bedeutung ist.

Das Verfahren dieser Erfindung wird im folgenden anhand von Ausführungsbeispielen, auf die sich die Figuren beziehen, näher erläutert; es zeigen:

| | |
|---|---|
| Fig. 1 | ein Blockschaltbild eines Analysegerätes zur Durchführung des erfindungsgemäßen Verfahrens, |
| Fig. 2 bis Fig. 4 | jeweils graphische Darstellungen der Topologie von Neural Nets, die bei bevorzugten Ausführungsformen der Erfindung zum Einsatz kommen, |
| Fig. 5 bis 8 | graphische Darstellungen von Kalibrationskurven, |
| Fig. 9 | eine graphische Darstellung von Kinetiken zu der Kalibrationskurve gemäß Fig. 8, |
| Fig. 10 | eine graphische Darstellung der Resultate einer Zuordnung von Meßergebnissen zu medizinisch-analytischen Zuständen. |

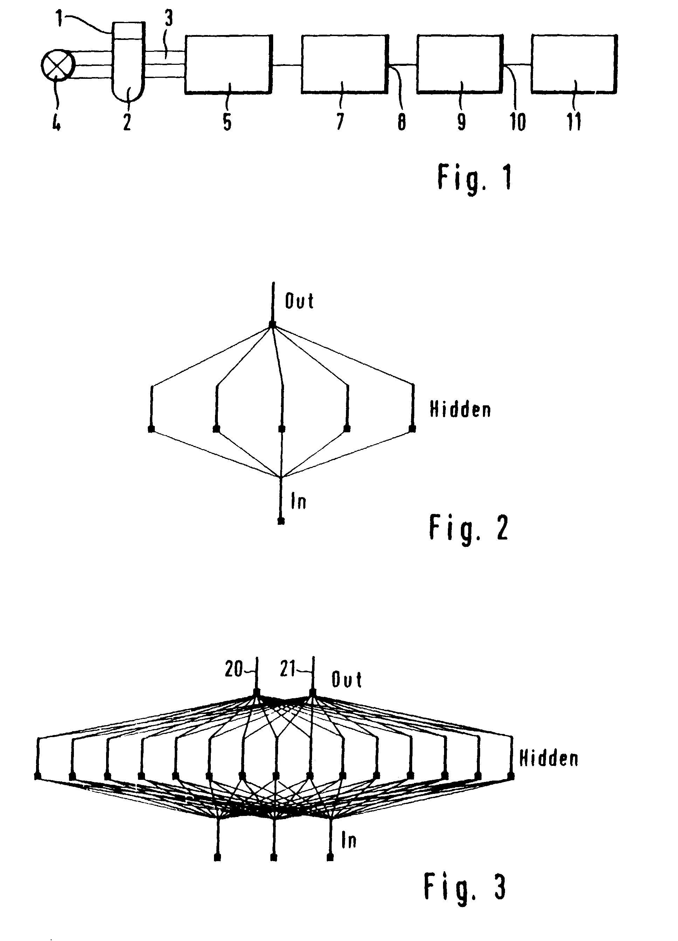

Fig. 1 zeigt in stark verallgemeinerter Form den prinzipiellen Aufbau eines automatischen Analysegerätes. Die in einer Küvette 1 befindliche Probe 2 wird von einem Meßlichtstrahl 3 durchsetzt, der von einer Lichtquelle 4 ausgeht. Der Meßlichtstrahl 3 ist ein Maß für die Absorption der Probe 2, die im Beispielsfall die Meßgröße X bildet. Er fällt auf einen Detektor 5, beispielsweise einen Phototransistor, dessen Ausgangssignal an eine Meßsignalaufbereitungsschaltung 7 angelegt ist. Sie umfaßt beispielsweise Verstärker, Filter und Signalformer, die in bekannter Art und Weise das Meßsignal verstärken und aufbereiten, so daß am Ausgang 8 der Meßsignalaufbereitungsschaltung 7 ein Meßsignal ansteht, dessen Größe den Meßwert R bildet.

Der Meßwert R liegt in analoger oder digitaler Form am Eingang einer Verarbeitungseinheit 9 an, die dazu dient, aus dem Meßsignal ein analytisches Resultat A zu bestimmen, das von ihrem Ausgang 10 an eine Ausgabeeinheit 11 (beispielsweise ein Display oder einen Drucker) geleitet wird und von dieser angezeigt werden kann. Die Verarbeitungseinheit kann grundsätzlich analogelektronisch oder als digitalelektronische Hardware realisiert sein. In der Praxis besteht sie nach dem gegenwärtigen Stand der Technik in aller Regel aus einem Mikrocomputersystem mit einer entsprechenden Betriebs- und Anwendungssoftware. Vielfach besteht der mittels der Verarbeitungseinheit 9 durchgeführte Verarbeitungsschritt (der insgesamt die Verarbeitung von einem oder mehreren Meßwerten R zu dem analytischen Resultat A umfaßt) aus mehreren Teilschritten. Dabei können z.B. aus jeweils mehreren Meßwerten $R_i$ zunächst nach vorbestimmten, definierten Verfahren abgeleitete Meßresultate bestimmt werden, die anschließend weiterverarbeitet werden.

Nachfolgend wird als erstes Anwendungsbeispiel des Verfahrens der Erfindung die Bestimmung der Konzentration C eines Analyten in einer Probe aus gemessenen Meßwerten R beschrieben.

Der funktionale Zusammenhang zwischen einer Eingangsvariablen Y (dem gemessenen Meßwert R bzw. einem aus mehreren Meßwerten abgeleiteten Meßresultat) und der Konzentration C wird durch eine Kalibrationskurve Y = f(C) beschrieben. Um die Kalibrationskurve zu bestimmen, werden Proben bekannter Konzentration ("Standards") analysiert. Aus den resultierenden Y,C-Paaren werden mit Hilfe eines mathematisch-analytischen Verfahrens (üblicherweise einer linearen oder nichtlinearen Regression) die Parameter einer Funktion bestimmt, die die Kalibrationskurve beschreiben.

Wenn erfindungsgemäß ein NN zur Kalibration eingesetzt wird, werden bei dessen Lernzyklus jeweils die an den Standards gemessenen Meßwerte R und die bekannten Konzentrationen C an den Input bzw. Output des NN angelegt. Sofern bei dem Analyseverfahren bei jeder Analyse nur ein Meßwert bestimmt wird, wird ein NN mit nur einem Neuron in der Eingangsschicht eingesetzt. Werden an jeder Probe mehrere Meßwerte bestimmt, die beispielsweise den zeitlichen Verlauf einer Kinetik beschreiben, so hat das NN entsprechend viele Neuronen in seiner Eingangsschicht. Anstelle der Original-Meßwerte können auch aus Kinetiken abgeleitete Meßresultate als Eingangsvariable für das Training und die Probenauswertung verwendet werden.

Die Netztopologie eines zur Kalibration geeigneten NN ist in Fig. 2 dargestellt. Sie besteht aus einer Eingangsschicht mit einem Neuron, an das bei dem Training jeweils die normierten Meßwerte für einen Standard angelegt werden und aus einer Ausgangsschicht mit ebenfalls nur einem Neuron, an dessen Ausgang die normierte Sollkonzentration des jeweiligen Standards angelegt wird. Dazwischen befindet sich eine eindimensionale verborgene Schicht, welche im dargestellten Fall fünf Neuronen hat.

Gegenüber den klassischen Kalibrationsverfahren hat die Kalibration und Konzentrationsbestimmung mit Hilfe eines NN vor allem folgende Vorteile.

Nicht alle Konzentrations/Meßwert-Abhängigkeiten lassen sich durch mathematische Funktionen ausreichend gut approximieren. In einigen Fällen gibt es keine analytische Lösung für die Auswertefunktion oder diese ist nicht über den gesamten Konzentrationsbereich definiert. Klassische Kalibrationsverfahren setzen im allgemeinen eine monotone Abhängigkeit der Kalibrations-Eingangsvariablen Y von der Konzentration voraus. Bei Verletzung dieses Monotonie-Kriteriums ist die Eindeutigkeit der Zuordnung nicht mehr gegeben, was zum Versagen klassischer Kalibrationsverfahren führt.

Beim Einsatz neuronaler Netze können wie erwähnt problemlos statt der Meßwerte auch daraus abgeleitete Meßresultate, wie beispielsweise Meßwertdifferenzen, Kurvenkrümmungen, integrierte Werte an den Input des NN angelegt werden. Diese zeigen möglicherweise eine bessere Korrelation zu der Konzentration C als der eigentliche Meßwert R. Dies kann im Rahmen des NN-Trainings in einfacher Weise erprobt werden, indem unterschiedliche aus den Meßwerten abgeleitete Meßresultate probeweise an den Input des NN angelegt werden.

Die praktische Erprobung hat gezeigt, daß durch diese Verbesserungen bei immunchemischen Testen eine Verkürzung der Reaktionszeiten erreicht werden kann.

Gemäß einer abgewandelten Ausführungsform des Verfahrens der Erfindung kann die Kalibration mit einer Kombination einer klassischen Kalibrationsfunktion und eines NN durchgeführt werden. Dies ist dann besonders vorteilhaft, wenn die Auswahl der Kalibrationsfunktion erst am jeweiligen Analysegerät in Abhängigkeit von dessen Zustand und/oder dem Zustand der Reagenzien erfolgen soll.

Die Kombination einer klassischen Kalibrationsfunktion mit einem NN-Training ist beispielsweise bei diagnostischen Tests vorteilhaft, deren Eichkurve sich in Lage und Form in Abhängigkeit von Belastungen wie beispielsweise der Lagertemperatur ändert. Beim Hersteller des Test können mit solchen Reagenzien definierte Alterungs- und Belastungsversuchsserien durchgeführt werden, die die Exposition, der die Reagenzien in den Labors unterworfen sind, und die damit verbundene Kalibrationskurvenänderung simulieren. Zu definierten Untersuchungszeiten $t_i$ werden jeweils vollständige Kalibrationen mit geeigneten (klassischen) Kalibrationen durchgeführt. Ein NN wird nun in der Weise trainiert, daß die Zeitintervalle oder Belastungsgrößen, die den Belastungsversuchen zugrunde lagen, an den Input des NN angelegt werden und die erhaltenen Funktionsparameter der Kalibrationskurven den Soll-Output darstellen. Im Labor werden die in der Praxis auftretenden Belastungsgrößen manuell eingegeben oder automatisch eingelesen. Der dann gültige Satz von Funktionsparametern wird von dem NN berechnet. Auf dem gleichen Wege können Unterschiede von Gerät zu Gerät, die vom Hersteller festgestellt werden, durch ein geeignetes Training ohne Eingreifen des Laborpersonals berücksichtigt werden.

In besonderem Maße eignet sich das erfindungsgemäße Verfahren in Fällen, die mit der klassischen Kalibration nicht oder nur sehr schwer zu lösen waren.

Ein erstes Beispiel hierfür sind Fälle, bei denen die überwiegende Mehrzahl der an Patienten-Proben bestimmten Analyt-Konzentrationen in einem relativ engen Konzentrationsbereich liegt, jedoch immer wieder einzelne Patienten-Proben sehr viel höhere oder niedrigere Werte aufweisen. Bei solchen Parametern besteht das Problem, daß es schwierig ist, eine ausreichende Menge von Standards für die Kalibration in dem gesamten medizinisch relevanten Konzentrationsbereich einschließlich der erwähnten Extremwerte zu erhalten, weil in vielen Fällen die Standards aus dem Blutserum freiwilliger Spender gewonnen werden müssen und diese naturgemäß nur in Ausnahmefällen extreme Konzentrationswerte aufweisen. Für solche Fälle erweist sich die vorliegende Erfindung als vorteilhaft, weil gefunden wurde, daß es ausreichend ist, das NN-Training überwiegend nur mit den Standards in dem häufig vorkommenden Konzentrationsbereich durchzuführen und anschließend mit einigen wenigen Standards in dem extremen Meßwertbereich nachzutrainieren. Bei Anwendung klassischer Kalibrationsverfahren ist es nicht zulässig, auf diese Weise eine Kalibrationskurve in einen Bereich zu extrapolieren, in dem der Zusammenhang zwischen C und Y nicht durch eine ausreichende Anzahl von Standards gesichert ist. Bei der erfindungsgemäßen Kalibration mit Hilfe eines NN wurde auch in dem "Extrapolationsbereich" eine zuverlässige Konzentrationsbestimmung erreicht.

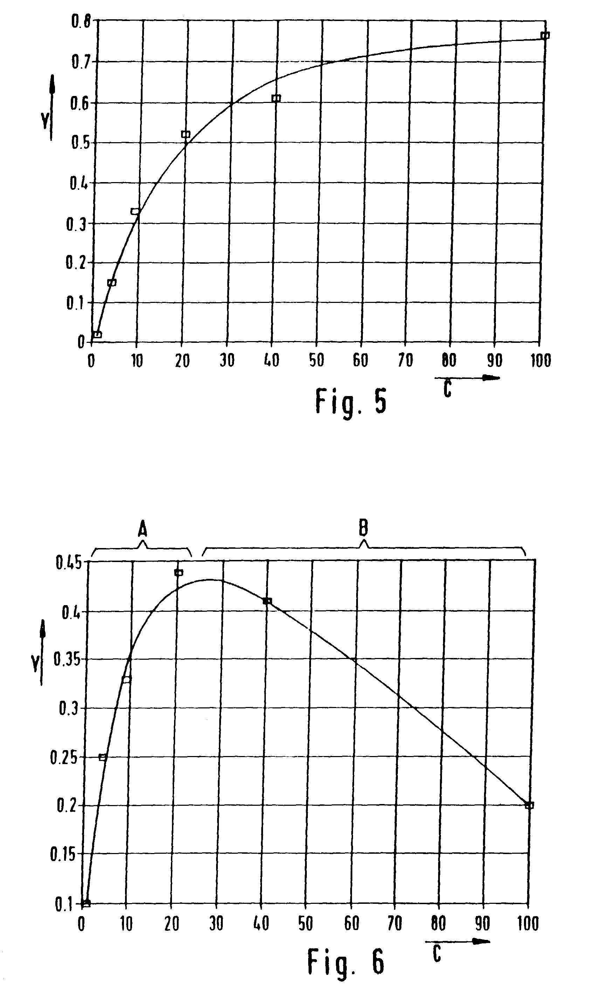

Ein zweiter Problemfall, bei dem sich die Erfindung bewährt hat, sind Analysen mit einer nichtlinearen Kalibrationskurve, die im Bereich hoher Konzentrationen einen flachen asymptotischen Verlauf zeigt (Fig.5). Bei Anwendung des erfindungsgemäßen Verfahrens konnte auch in dem asymptotischen Teil der Kalibrationskurve eine zuverlässige, wenn auch gröbere Konzentrationszuordnung erreicht werden.

Ein drittes Beispiel problematischer Kalibrationskurven ist in Fig. 6 dargestellt. Dabei ist der Zusammenhang zwischen der Eingangsvariablen Y und der Konzentration C nicht monoton. In diesem Fall ergibt sich bei Verwendung eines klassischen Kalibration keine eindeutige Zuordnung eines gemessenen Y zu einer Konzentration C. Mit Hilfe eines Neural Net ist hingegen eine eindeutige Zuordnung möglich, wenn für jede Konzentration nicht nur ein Meßwert, sondern mehrere Meßwerte $R_i$ an den Input des NN angelegt werden, die beispielsweise eine Kinetik $R_i(t_i)$ beschreiben. Hierauf wird weiter unten im Zusammenhang mit einem anderen Ausführungsbeispiel noch näher eingegangen.

Bei semi-quantitativen Analysen besteht das analytische Resultat A, wie weiter oben erläutert wurde, nicht in einer Konzentration C, sondern in der Angabe einer Zuordnung der Probe zu einem von mindestens zwei unterschiedlichen medizinisch-analytischen Zuständen, beispielsweise "positiv" und "negativ". Die Konzentrationsgrenze zwischen medizinisch-analytischen Zuständen wird üblicherweise empirisch festgelegt und als "Cut-off" bezeichnet.

Ein Problem bei der klassischen Festlegung des Cut-off besteht darin, daß dieser in der Praxis vielfach von dem untersuchten Patientenkollektiv abhängig ist. Im Rahmen der Erfindung wird die klassische Festlegung eines Cut-off mit Hilfe einer Formel und der darin enthaltenen Parameter durch ein Auswerteverfahren auf Basis eines NN ersetzt. Dabei können an den Input des NN Meßwerte oder daraus abgeleitete Meßresultate in der gleichen Weise wie bei der Bestimmung einer Konzentration C angelegt werden.

An den Output des NN wird in dem Trainingsschritt die bekannte richtige Zuordnung zu den medizinisch-analytischen Zuständen angelegt. Während die Konzentration C ein kontinuierliches Wertespektrum hat, sind die medizinisch-analytischen Zustände ein Beispiel von Ausgangsvariablen des neuronalen Netzes mit einem diskreten Wertespektrum. In solchen Fällen wird (ähnlich wie bei der Digitalelektronik üblich) der Ausgangsspannungsbereich der Neuronen der Ausgangsschicht in jeweils zwei Teilbereiche aufgeteilt, wobei der Teilbereich oberhalb eines Grenzwertes als "high" oder "logisch 1" interpretiert wird, während der Spannungsbereich unterhalb des Grenzwertes als "low" bzw. "logisch 0" interpretiert wird. Hieraus resultiert die erforderliche Anzahl der Neuronen der Ausgangsschicht. Wenn das diskrete Wertespektrum der Ausgangsvariablen nur zwei logische Zustände annehmen kann, genügt ein Neuron in der Ausgangsschicht, dessen Output diese beiden Zustände annehmen kann. Es kann jedoch auch zweckmäßig sein, mit einer gewissen Redundanz zu arbeiten und mehr als die unbedingt erforderliche Zahl von Neuronen in der Ausgangsschicht vorzusehen. Beispielsweise zeigt Fig. 3 die Topologie eines NN, welches dazu vorgesehen ist, die Ergebnisse einer Messung zwei medizinisch-analytischen Zuständen (z.B. positiv und negativ) zuzuordnen. Beim Training kann beispielsweise der Zustand "positiv" der Signalkombination (1,0) an den Ausgängen 20 und 21 entsprechen, während "negativ" der Signalkombination (0,1) entspricht. Diese Vorgehensweise hat den Vorteil, daß bei der Anwendung des Ergebnisses des NN-Trainings die nicht zulässigen Signalkombinationen (1,1) und (0,0) als fehlerhaft erkannt werden.

In Fällen, in denen das analytische Resultat A oder die Hilfsgröße als Ausgangsvariable des NN ein aus diskreten Werten bestehendes Wertespektrum hat, ist allgemein eine sigmoide Aktivierungsfunktion oder eine Schwellwertfunktion vorzuziehen, während im Falle eines kontinuierlichen Wertespektrums sich in der Regel eine lineare Aktivierungsfunktion am besten bewährt.

Das Training erfolgt analog dem zuvor beschriebenen Fall (Bestimmung einer Konzentration), wobei an den Output jeweils als analytisches Resultat A die korrekte Zuordnung zu dem medizinisch-analytischen Zustand, also beispielsweise "positiv" oder "negativ" angelegt wird. Bei dieser Vorgehensweise besteht die Möglichkeit, das NN mit Proben eines Patientenkollektivs zu trainieren, welches in seiner Zusammensetzung dem Patientenkollektiv des jeweiligen Labors entspricht. Dadurch wird der Cut-off semiquantitativer Tests ohne aufwendige Untersuchungen jeweils optimal festgelegt und die Anzahl falsch positiver oder falsch negativer Resultate minimiert.

Auch bei diesem Ausführungsbeispiel kann es zweckmäßig sein, das NN-Training in zwei Teilschritten durchzuführen, wobei das Grundtraining beim Hersteller des Tests mit einem breit gestreuten Patientenprobenkollektiv durch ein Nachtraining am Gerät ergänzt wird, bei welchem für das jeweilige Labor spezifische Referenzproben mit bekannter Zuordnung zu einem medizinisch-analytischen Zustand an das NN angelegt werden. Solche Referenzproben-Messungen sind bei qualitativen Analysen gebräuchlich.

Ein weiteres Ausführungsbeispiel der Erfindung bezieht sich auf Fälle, bei denen die Kalibrationskurve Y = f (C) nicht monoton ist, so daß der gleiche Wert einer Eingangsvariablen Y (Meßwert oder daraus abgeleitete Meßresultate) auf mindestens zwei Teilbereichen der Kalibrationskurve unterschiedlichen Werten der Konzentration C entspricht. In solchen Fällen ist mit klassischen Auswertungsverfahren eine eindeutige Zuordnung einer gemessenen Eingangsvariable Y zu einem Konzentrationswert C nicht oder nur mit sehr hohem Aufwand möglich. In aller Regel werden zusätzliche analytische Bestimmungen nach Verdünnung der Probe erforderlich. Ein besonders wichtiges Beispiel solcher Verfahren sind homogene immunchemische Analysen auf Basis der Antikörperpräzipitation, wobei die Eichkurve als "Heidelberger Kurve" bezeichnet wird. Der grundsätzliche Verlauf einer solchen Kalibrationskurve ist in Fig. 6 dargestellt. Da diese Problematik bekannt ist (vgl. z.B. EP-A-0 148 463 und DE-A-4 221 807) muß sie hier nicht näher erläutert werden.

In diesem Anwendungsfall werden an den Input des NN Meßwerte oder daraus abgeleitete Meßresultate angelegt, die dem NN eine Information über die Kinetik R(t) der Meßgröße vermitteln, wobei die Meßgröße insbesondere die Trübung der Probe ist, welche nephelometrisch oder turbidimetrisch bestimmt wird. Ähnlich wie in den vorausgehenden Fällen können die Eingangsvariablen des NN entweder einer Mehrzahl von zu verschiedenen Zeitpunkten bestimmten Meßwerten $R_i(t_i)$ oder daraus abgeleitete Meßresultate oder eine Kombination dieser beiden Typen von Eingangsvariablen sein.

An den Output des NN wird in dem Trainingsschritt als mit dem analytischen Resultat verknüpfte Hilfsgröße die korrekte Zuordnung zu einem Teilbereich der Kalibrationskurve (in Fig. 6 sind Teilbereiche A und B eingezeichnet) angelegt. Da es sich auch hier um ein diskretes Wertespektrum der Ausgangsvariablen handelt, gelten hinsichtlich der Neuronen der Ausgangsschicht die vorstehenden Erörterungen.

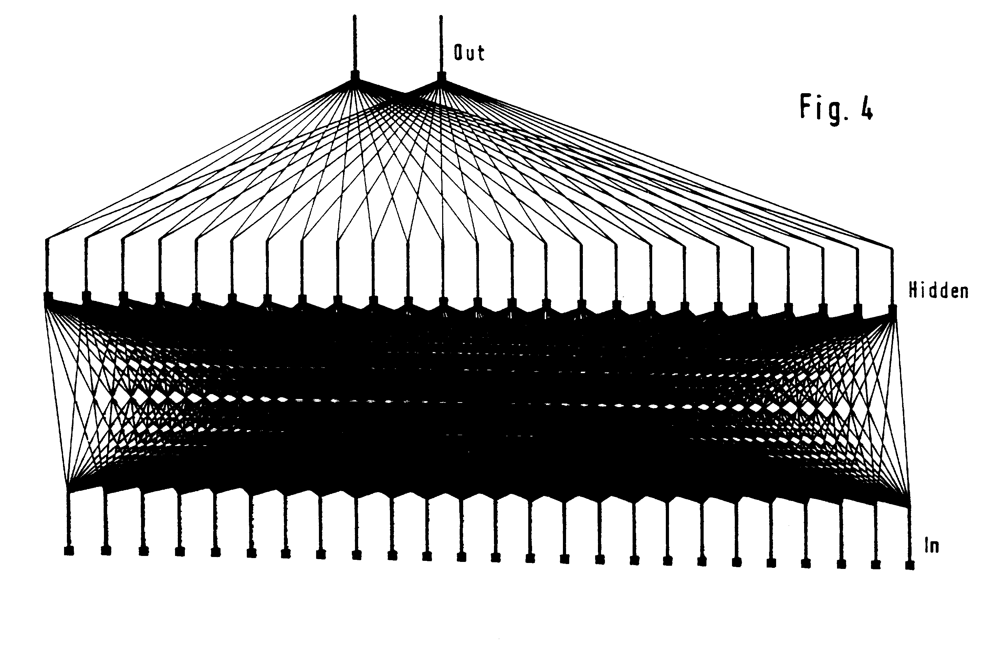

Fig. 4 zeigt beispielhaft die Topologie eines für diesen Anwendungszweck geeigneten NN, wobei die Eingangsschicht 25 Neuronen hat, an die gleichzeitig normierte Extinktionswerte (als Meßwerte) oder daraus abgeleitete Meßresultate angelegt werden können, die eine gemessene Reaktionskinetik beschreiben. Die Ausgangsschicht weist zwei Neuronen auf. Dazwischen ist eine verborgene Schicht mit 25 Neuronen vorgesehen. Die interneuronalen Verbindungen sind jeweils zwischen sämtlichen Neuronen benachbarter Schichten vorgesehen.

Die Erprobung hat gezeigt, daß es auf diese Weise möglich ist, bei den erwähnten homogenen immunchemischen Tests die Zuordnung zu den Teilbereichen der Kalibrationskurve mit für praktische Zwecke ausreichender Sicherheit vorzunehmen. Dadurch wird der Aufwand für zusätzliche Bestimmungen vermieden und die Sicherheit der Analyse erhöht. Von besonderem Vorteil ist diese Ausführungsform der Erfindung in Fällen, bei denen der klinisch relevante Konzentrationsbereich besonders hohe Konzentrationswerte einschließt und deswegen klassische Verfahren, die die Zweideutigkeit der Kalibrationskurve von vornherein vermeiden sollen, wie insbesondere die Verwendung einer stark erhöhten Antikörperkonzentration aus ökonomischen Gründen unvorteilhaft ist.

Ein weiterer Anwendungsfall der Erfindung ist die Fehlerdetektion an automatischen Analysesystemen.

Um die Qualität der diagnostischen Bestimmungen zu sichern, sowie aufgrund gesetzlicher Vorschriften, besteht ein dringendes Interesse, Fehlerdetektionsroutinen in automatischen Analysesystemen vorzusehen. Diese müssen um so vollständiger und sicherer sein, je höher der Automatisierungsgrad des Gerätes ist.

Andererseits sind die Möglichkeiten der Fehlererkennung mit Hilfe von konventionellen Methoden aufgrund der außerordentlich komplizierten Aufgabe sehr beschränkt. Die Vielfalt der diagnostisch bedeutsamen Analyten, die mit dem gleichen automatischen Analysesystem bestimmt werden müssen, die konzentrationsmäßigen Unterschiede, sowie die komplexen Abläufe bei der Analyse (Probenbehandlung, Reagenzzugabe, Meßsignalerfassung und-Zuordnung) machen es schwierig und teilweise unmöglich, die möglichen Fehlerkonstellationen in einer Weise zu erfassen, die durch die konventionelle Geräteelektronik korrekt verarbeitet werden kann.

Im Rahmen der Erfindung wurde festgestellt, daß Neural Nets vorteilhaft für die Fehlererkennung auf automatischen Analysegeräten verwendet werden können. Dabei ist erforderlich, daß der Trainingsschritt zum Erlernen der Fehlermuster durch das NN vor Beginn der Messungen im klinischen Labor abgeschlossen ist. Er wird deshalb vorzugsweise vom Hersteller des Reagenzsystems durchgeführt, insbesondere um mit dem Reagenzsystem zusammenhängende Fehlerquellen erkennbar zu machen, wobei es vorteilhaft sein kann, auf dem Analysegerät ein Nachtraining im Hinblick auf gerätespezifische Fehlerquellen durchzuführen. Zur Fehlererkennung können an den Input des NN die gleichen Eingangsvariablen wie bei dem zuvor erwähnten Anwendungsbeispiel einer nicht monotonen Kalibrationskurve angelegt werden. Damit stehen dem NN auch in diesem Falle Informationen über die Kinetik zur Verfügung.

Das Training kann dabei in der Weise erfolgen, daß an den Output des NN ein Fehlercode angelegt wird, welcher gestörte Kinetiken von Sätzen ungestörter Kinetiken unterscheidet. Beispielsweise können Proben oder Reagenzien verwendet werden, bei denen typische Fehlerzustände bewußt herbeigeführt wurden. Ein Beispiel sind sauerstoff-verarmte Proben in Fällen, bei denen die Analyse einen ausreichenden Sauerstoffgehalt der Probe erfordert. Dabei wird das NN trainiert, indem stets dann, wenn eine sauerstoffverarmte Probe analysiert wird, der Fehlercode "Fehler" an den Output des NN angelegt wird, während bei normalen Proben der am Output des NN anliegende Zustand "Nichtfehler" ist. Dabei kann ein NN mit der gleichen grundsätzlichen Topologie wie beim vorhergehenden Beispiel (Fig.4) verwendet werden.

Die Erprobung hat gezeigt, daß auf diese Weise eine zuverlässige Unterscheidung fehlerbehafteter Kinetiken von fehlerfreien Kinetiken möglich ist, obwohl diese vielfach keine Auffälligkeiten zeigen, welche ohne weiteres mit konventionellen Mitteln der Meßsignalverarbeitung als fehlerhaft erkannt werden könnten. Beispielsweise werden Fehlerquellen vermieden, wie sie bei konventionellen Verfahren, beispielsweise durch die gegenseitige Kompensation von Fehlern, entstehen können.

Die Fehlererkennung ist ein besonders wichtiger Beispielsfall für die Verwendung von SOM's auf automatischen Analysegeräten. Dabei werden an den Eingang einer Kohonen feature map in einem Trainingsschritt für eine Vielzahl von Kinetiken unterschiedlicher Proben Meßwerte oder daraus abgeleitete, die Reaktionskinetik beschreibende Meßresultate, angelegt. Dies führt - wie beschrieben - dazu, daß in der Kartenschicht der SOM charakteristische Eigenschaften der angelegten Kinetiken räumlich abgebildet werden. Im Rahmen der Erfindung wurde festgestellt, daß auf diese Weise eine zuverlässige Trennung fehlerbehafteter Kinetiken von fehlerfreien Kinetiken in ihrer Abbildung in der Kartenschicht der SOM erreicht wird. Damit ist es möglich, bestimmte Teilbereiche der Kartenschicht als fehlerbehaftet bzw. fehlerfrei zu definieren und durch Anwendung des SOM in der laufenden Analyse fehlerbehaftete Kinetiken zu erkennen und zu eliminieren.

Ein weiteres interessantes Anwendungsgebiet des Verfahrens der Erfindung ist die Verlängerung der Verwendungsdauer von Reagenzien. Die Reagenzien klinischer Analysesysteme unterliegen einem Alterungsprozeß. In der Praxis werden Ungenauigkeiten dadurch auf ein vertretbares Maß reduziert, daß verhältnismäßig kurze Verfallszeiten festgelegt werden. Dies führt jedoch zu einem erheblichen ökonomischen Aufwand.

Dieser Aufwand läßt sich im Rahmen des Verfahrens der Erfindung wesentlich reduzieren, wenn man in dem Neural Net-Training an zusätzliche Neuronen der Eingangsschicht eine oder mehrere die Alterung der Reagenzien beschreibende Hilfsgrößen (im einfachsten Fall deren Lagerzeit) anlegt und das Training mit unterschiedlich alten Reagenzien durchführt. Dabei kann man so vorgehen, daß man jeweils an den Eingang die gemessenen Meßwerte bzw. Meßresultate und an den Ausgang die Soll-Meßwerte für frisches Reagenz anlegt und das NN zur Korrektur der Meßwerte einsetzt. Vorzugsweise wird jedoch die Kalibration und die Korrektur der Reagenzalterung zusammengefaßt, wobei das vorbeschriebene Kalibrationsverfahren lediglich dadurch erweitert wird, daß zusätzliche Input-Neuronen für eine oder mehrere die Reagenzalterung beschreibende Hilfsgrößen vorhanden sind und sich das Training auf Reagenzien unterschiedlichen Alters erstreckt.

Schließlich ist die simultane Analyse mehrerer Analyten in einer Probe ein weiteres Anwendungsgebiet der Erfindung. Während es in der allgemeinen chemischen Analytik bei geeigneten Verfahren (wie beispielsweise der Elektrophorese) bereits weit verbreitet ist, aus einer Probe simultan mehrere unterschiedliche Analyten zu bestimmen, ist dies bei der Analyse medizinischer Proben bisher nicht gebräuchlich. Bei konventionellen Auswerteverfahren sind die Verläufe der Kalibrationskurven zu unspezifisch, um aus der überlagerten Kalibrationskurve zweier Tests ein analytisches Resultat für zwei Komponenten getrennt auswerten zu können.

Auch in diesem Fall kann das Verfahren der Erfindung vorteilhaft eingesetzt werden, wobei an den Input des neuronalen Netzes, wie bei den vorausgehenden Fällen, Meßwerte oder daraus abgeleitete Meßresultate als Eingangsvariable angelegt werden. Vorzugsweise werden auch hier Eingangsvariable die die Kinetik beschreiben, verwendet. Als Ausgangsvariable können in diesem Fall unmittelbar die beiden Konzentrationen mit einem kontinuierlichen Wertespektrum an zwei Neuronen der Ausgangsschicht in dem Trainingsschritt angelegt werden.

Die nachfolgenden Beispiele dienen der weiteren Erläuterung des Verfahrens der Erfindung.

Beispiel 1:

Zur Ermittlung des Parameters LH (humanes luteinisierendes Hormon) in Patientenproben mittels eines NN wurden jeweils 15 LH-Standards (Proben mit bekannter LH-Konzentration) in drei Serien mit dem Enzymun-Test[R] System ES 300 der Boehringer Mannheim GmbH, Mannheim, BRD, vermessen. Es handelt sich dabei um eine Bestimmung, bei der für jede Konzentration ein Extinktions-Meßwert gemessen wird. Die Meßwertpaare aus Konzentration C und zugehörigem Extinktions-Meßwert E wurden normiert ($C_0=0$, $C_{max}=1$ und $E_0=0$, $E_{max}=1$) zum Training des neuronalen Netzes verwendet.

Dabei wurde das Programm "Neural Works Professional II" der Neural Ware, Inc., Pittsburgh, PA, USA, verwendet, welches auf einem Standard-Personal-Computer mit Intel 80486-Prozessor installiert war.

Die Netzstruktur und die Lernparameter wurden wie folgt optimiert.

Die Netztopologie entsprach Fig. 2. Die Lernrate des NN wurde auf 0,9 und das Momentum auf 0,6 eingestellt. Für alle Neuronen wurde eine lineare Output-Funktion gewählt. Beim Training kam ein Backpropagation-Algorithmus zur Anwendung. Insgesamt wurden 30000 Lernzyklen durchlaufen, bis die Error-Funktion einen maximalen Fehler von weniger als $10^{-4}$ ergab. Von der Möglichkeit des Programms, eine Rauschfunktion einzuschalten, wurde kein Gebrauch gemacht.

Nach Abschluß des Trainings wurde mit Hilfe des Programms Neural Works Professional II ein eigenständiges C-Programm generiert, in dem die Parameter der Netzwerktopologie und die Wichtungsmatrix als Konstanten enthalten waren. Die Größe dieses C-Moduls betrug etwa 2 KByte.

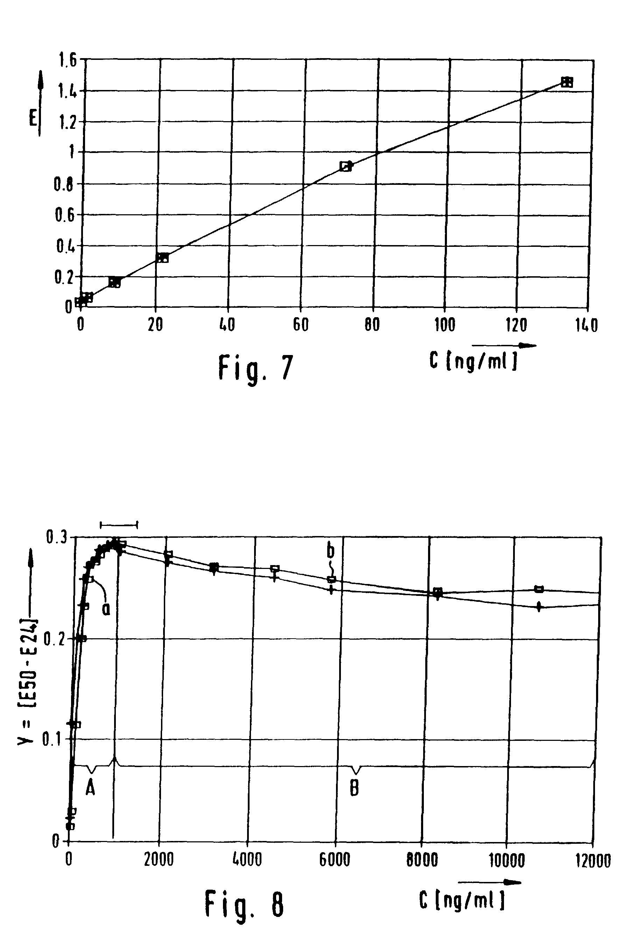

Zur Ermittlung der LH-Konzentration in Proben mit unbekanntem Analytgehalt wurden diese mit dem Enzymun-Test LH System ES 300 vermessen. Das Ergebnis des NN-Trainings wurde dabei in der Weise verwendet, daß die gemessenen Extinktionswerte mit dem bei dem Training verwendeten Normierungsfaktor normiert wurden und mit Hilfe des C-Programms daraus die Probenkonzentrationen errechnet wurden. Im Rahmen der Fehlertoleranz des verwendeten Testsystems waren die so ermittelten Konzentrationen zu 100 % richtig. In Fig. 7 ist die Relation zwischen der Konzentration C und der Extinktion E (als Kalibrationsvariable Y) dargestellt. Dabei bezeichnen die Rechtecke die mit Standardproben bekannter Konzentration gemessenen Extinktionen. Die durchgezogene Linie entspricht einer auf der Basis eines klassischen phänomenologischen Modells bestimmten Kalibrationskurve. Die Kreuze bezeichnen Konzentrationswerte, die mit Hilfe eines NN in der beschriebenen Weise bestimmt wurden. Man erkennt die vollständige Übereinstimmung.

Beispiel 2:

Ein NN wurde wie folgt eingesetzt, um Konzentrationen im Fall einer nichtmonotonen Kalibrationskurve zu bestimmen. Dabei wurden Proben mit bekannter Konzentration des Analyten Ferritin (sowohl mit dem Reagenzsystem gelieferte Standards, als auch Seren von Patienten mit bekanntem Ferritin-Gehalt) mit Hilfe des Testsystems "Tinaquant$^R$ Ferritin-Test" und des Analysegerätes Hitachi$^R$ 717 (beides lieferbar von der Boehringer Mannheim GmbH) eingesetzt. Es wurden zwei unterschiedliche Herstellungschargen des Reagenzsystems verwendet und verglichen.

Der Test ist ein homogener immunchemischer Test, dessen Eichkurve die Form einer "Heidelberger-Kurve" hat. Die Umkehrung der Kalibrationskurve oberhalb eines bestimmten Konzentrationswertes wird auch als "Hook-Effekt" bezeichnet.

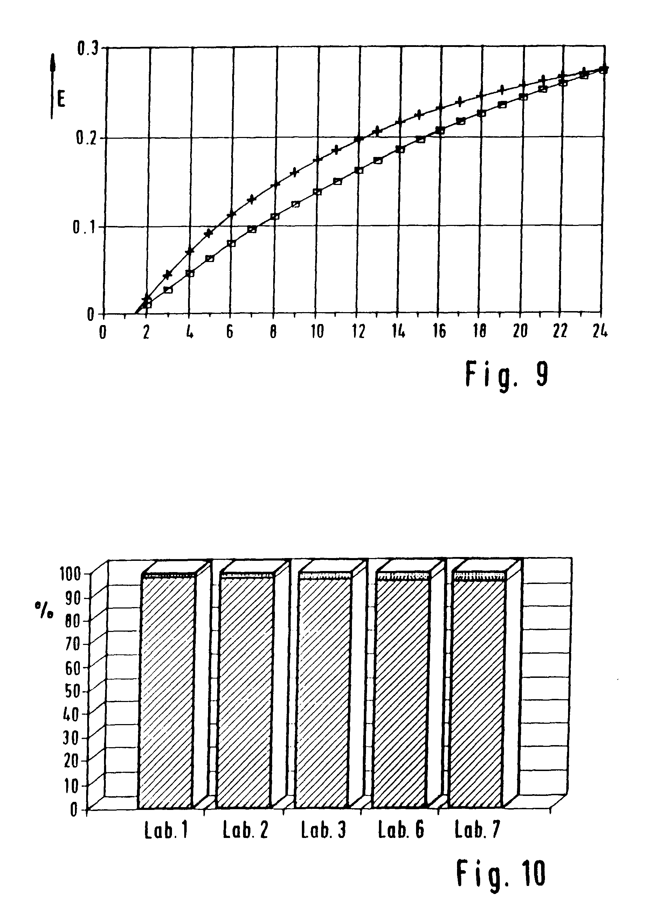

Dabei wurde die Kinetik der Extinktion durch regelmäßige Messungen im Abstand von 12 Sekunden verfolgt. Als Kalibrations-Eingangsvariable Y wurde die Differenz zwischen der 50. und der 24. Extinktionsmessung verwendet. Fig. 8 zeigt die Relation zwischen der Eingangsvariablen $Y = E_{50}-E_{24}$ und der Ferritin-Konzentration C in Form einer nichtmonotonen Heidelberger-Kurve mit den Teilbereichen A und B. Zwei unterschiedliche Reagenzchargen sind mit Rechtecken bzw. Kreuzen markiert. Fig. 9 zeigt Kinetiken der in Fig. 8 mit a und b bezeichneten Meßpunkte. Man erkennt, daß diese Meßpunkte (mit den Konzentrationen 350 ng/ml für a und 6000 ng/ml für b) trotz praktisch identischer Werte der Kalibrations-Eingangsvariablen Y unterschiedliche kinetische Verläufe aufweisen. Als Neural Net-Simulation wurde die Software BrainMaker Professional$^R$ der California Scientific Software verwendet, die auf einem Standard-PC mit Prozessoren Intel 80386/80387 implementiert war.

Folgende Netzstruktur und Lernparameter wurden eingestellt: Die Netztopologie (Fig. 4) bestand aus 25 Neuronen in einer Eingangsschicht, an die die normierten Extinktionen ($E_{tmin}=0$, $E_{tmax}=1$) angelegt wurden. Die Ausgangsschicht hatte 2 Neuronen, an die je ein (0,1) Wert für die Zuordnung zu den Teilbereichen A oder B der Kalibrationskurve angelegt wurde. Zwischen der Eingangsschicht und der Ausgangsschicht befand sich eine eindimensionale verborgene Schicht mit 25 Neuronen. Die Lernrate betrug 1,0 und das Momentum war auf 0,9 eingestellt. Für alle Neuronen wurde eine sigmoide Aktivierungsfunktion gewählt. Beim Training kam ein Counterpropagation-Algorithmus zur Anwendung. Insgesamt wurden 150 Lernzyklen durchlaufen, bis die Error-Funktion einen maximalen Fehler von weniger als 0,1 ergab. Es wurde eine Rauschfunktion mit randomisierten Störungen von 0 - 20 % bezogen auf die Extinktionswerte eingeschaltet.

Nach Abschluß der Trainingsphase wurde mit Hilfe des Programms BrainMaker Professional$^R$ ein eigenständiges C-Programm generiert, in dem die Parameter der Netzwerktopologie und die Wichtungsmatrix als Konstanten enthalten waren. Im Beispielsfall betrug die Größe des C-Moduls einschließlich der Datenmatrix 21 KByte.

Zur Prüfung der Funktion wurden Proben mit unterschiedlichen Ferritin-Konzentrationen sowohl unverdünnt als auch verdünnt mit dem genannten Reagenzsystem und automatischen Auswertegerät vermessen. Aus den normierten Extinktionswerten wurden mit Hilfe des C-Programmes die Output-Werte des NN, d.h. die Zuordnung zu den Teilbereichen A und B der Heidelberger-Kurve ermittelt. Die Resultate wurden mit den Ergebnissen von Versuchen verglichen, bei denen die Proben verdünnt worden waren, um den Hook-Effekt zu vermeiden. In allen untersuchten Fällen wurden die Extinktionen der unverdünnten Proben den Teilbereichen richtig zugeordnet und demzufolge korrekte Konzentrationswerte erhalten.

Beispiel 2a:

Mit dem Datensatz des Beispiels 2 wurde die erfindungsgemäß mögliche Reduzierung der Meßzeit bei kinetischen Analysen erprobt. Dabei wurden nur die jeweils ersten 24,23,22,18 und 14 Meßwerte der insgesamt aus 25 Meßpunkten bestehenden Kinetik verwendet. Als Neural Net-Simulation wurde dabei das gleiche Programm wie bei Beispiels 1 eingesetzt.

Das NN hatte dabei eine der Anzahl der Meßwerte entsprechende Anzahl von Neuronen in der Eingangsschicht und ein Neuron in der Ausgangsschicht. Zwischen der Eingangsschicht und der Ausgangsschicht befand sich eine eindimensionale verborgene Schicht mit 9 Neuronen. Die Lernrate betrug 0,3 und das Momentum war auf 0,01 eingestellt. Als Aktivierungsfunktion für alle Neuronen wurde ein Tangenshyperbolycus verwendet. Beim Training kam ein Backpropagation-Algorithmus zur Anwendung.

Auch in diesem Fall wurde mit Hilfe des NN-Simulationsprogramms ein eigenständiges Programm generiert, in dem die aus dem Training resultierenden Parameter der Netzwerktopologie und die Wichtungsmatrix als Konstanten enthalten waren.

Es wurde festgestellt, daß selbst mit nur 14 Meßpunkten die Analytkonzentration gut wiedergefunden wurde. Die Abweichung betrug mit Ausnahme der kleinsten Konzentrationswerte (bei denen man sich an der Grenze des Auflösungsvermögens des Systems befindet) weniger als 5%.

Beispiel 3:

Um die Verwendung eines NN zur Fehlererkennung zu erproben, wurden Analysen mit Hilfe des Triglyceride-GPO-PAP-Tests der Boehringer Mannheim GmbH durchgeführt. Dabei wurden 350 Extinktions-/Zeit-Verläufe mit hohen und niedrigen Triglycerid-Konzentrationen untersucht. Es wurden dabei normale und künstlich Sauerstoff-verarmte Reagenzien eingesetzt. Als Analysegerät wurde wiederum das Hitachi-717$^R$ verwendet.

Bei diesem Beispiel wurde als NN-Simulation die Neural Network Software ANSim$^R$ der Science Applications International Corporation verwendet, welche wiederum auf einem 80386/80387 PC implementiert war.

Folgende Netzstruktur (ähnlich Fig. 4) und Lernparameter wurden eingestellt: Die Eingangsschicht bestand aus 50 Neuronen, an welche die normierten Extinktionswerte $E_{tmin}$=-0,5, $E_{tmax}$=0,5 angelegt wurden. Die Ausgangsschicht bestand aus zwei Neuronen zum Anlegen von je einem (0,1) Wert für die "normale" Kinetik und für die "gestörte" Kinetik. Dazwischen befand sich eine eindimensionale verborgene Schicht mit 25 Neuronen. Die Lernrate betrug 0,01 und das Momentum war auf 0,6 eingestellt. Für alle Neuronen wurde eine sigmoide Aktivierungsfunktion gewählt. Beim Training kam ein Backpropagation-Algorithmus zur Anwendung. Insgesamt wurden 350 Lernzyklen durchlaufen, bis die Error-Funktion einen mittleren Fehler von weniger als $2x10^{-3}$ ergab. Es wurde keine Rauschfunktion eingeschaltet.

Die Überprüfung auf richtige Fehlerdetektion erfolgte mit weiteren 30 Proben, die bei anderen Untersuchungen z.T. auffällige Kinetiken gezeigt hatten. Dabei wurden jeweils 50 Extinktionswerte aus einer Kinetik in einer Datei abgespeichert und der ANSim-Software zur Verfügung gestellt. Die Auswertung erfolgte mittels des gleichen NN-Programms unter Verwendung der mit dem Trainingslauf ermittelten Struktur und Wichtungsmatrix. Die Ergebnisse wurden verglichen mit graphischen Darstellungen der Extinktions-/Zeit-Verläufe, aus denen evtl. Störungen unmittelbar ersichtlich sind. Bei allen untersuchten Proben stimmte das Ergebnis der automatischen Fehlerdetektion mittels Neuronal Net und das der graphischen Auswertung überein.

Beispiel 3a:

Mit dem gleichen Test wie bei Beispiel 3 wurde die Verwendung einer SOM (Kohonen feature map) zur Fehlererkennung erprobt. Dabei wurde ein Versuchssatz von 355 Reaktionskinetiken zunächst von einem erfahrenen Techniker in normale und gestörte Kinetiken klassifiziert. Die Klassifikation ergab 277 normale und 78 anormale Kinetiken. Die Anomalien lagen in verschiedensten technischen und chemischen Störungen des Reaktionsablaufs, die mit unterschiedlicher Häufigkeit auftraten und sich in den Kinetiken widerspiegelten.

Die Simulation des SOM erfolgte mit Hilfe des gleichen Programmpakets wie bei Beispiel 1. Die Eingangsschicht hatte 50 Neuronen, an die die im Beispiel 3 erläuterten normierten Extinktionswerte angelegt wurden. Die Kartenschicht hatte 40 Neuronen.

Nach Beendigung des Trainings mit den erwähnten 355 Kinetiken, resultierte eine deutliche Zweiteilung der Erregungsintensität in zwei Teilbereichen der Kartenschicht. Die Prüfung ergab, daß mit wenigen Ausnahmen der eine größere Teilbereich die normalen Kinetiken (nämlich 274 von 277) enthielt, während der zweite Bereich die anormalen Kinetiken (nämlich 74 von 78) enthielt.

Beispiel 4:

Um die Verwendung eines NN zur Zuordnung von Meßergebnissen zu den medizinisch-analytischen Zuständen eines qualitativen Tests zu erproben, wurde der Hepatitis-Parameter HBE in mehreren Labors an jeweils 150 bis 250 Patientenproben vermessen. Außerdem wurden Meßwerte (Extinktions-Kinetiken) an zwei Referenzproben ("Kontrollen") vermessen, die den Zuständen positiv und negativ zugeordnet waren. Die gemessenen Extinktionswerte wurden separat für die Labors normiert wie in Beispiel 1 beschrieben.

Eingesetzt wurde das NN-System gemäß Beispiel 2.

Die Netzstruktur bestand aus drei Input-Neuronen (für die Extinktion der Probe, der Positiv- und der Negativkontrolle), einer verborgenen Schicht mit 15 Neuronen sowie zwei Output-Neuronen (für positiven und negativen Befund). Die Lernrate betrug 1,0 und das Momentum war auf 0,9 eingestellt. Es wurde keine Rauschfunktion verwendet.

Für alle Neuronen wurde eine sigmoide Aktivierungsfunktion benutzt.

Nach Abschluß des Trainings wurde die Zuverlässigkeit der Zuordnung durch Klassifizierung der Proben innerhalb des verwendeten Neural Net-Simulators BrainMaker Professional überprüft. Dabei wurden die Meßwerte aus Labor 7 für das Training verwendet. Die Ergebnisse dieses Trainings wurden für die Auswertung der Meßdaten sämtlicher Labors eingesetzt. Das Ergebnis ist in Fig. 10 dargestellt. Die Anzahl der richtigen Zuordnungen war bei den Testdaten aus allen Labors größer als 95 %, in einigen Fällen war der Anteil der Fehlzuordnungen (falsch positiv oder falsch negativ) kleiner als 1 %, wobei durch weitere Optimierung noch bessere Werte erreichbar sind.

**Patentansprüche**

1. Verfahren zur Analyse eines Bestandteils einer medizinischen Probe mittels eines automatischen Analysegerätes, in welchem eine Reaktion der Probe mit einem Reagenzsystem durchgeführt und eine aus der Reaktion der Probe mit dem Reagenzsystem resultierende physikalisch nachweisbare Meßgröße X gemessen wird, um für eine bestimmte Probe mindestens einen Meßwert R zu bestimmen und in welchem der mindestens eine Meßwert R mittels einer Verarbeitungseinheit in einem Verarbeitungsschritt weiterverarbeitet wird, um daraus ein korrektes analytisches Resultat A zu bestimmen, wobei in dem Verarbeitungsschritt die Ergebnisse eines Neural Net-Trainings verwendet werden, bei welchem für eine Mehrzahl von Standard-Proben, für die das analytische Resultat A bekannt ist, jeweils mindestens ein Meßwert oder ein aus mehreren Meßwerten $R_i$ abgeleitetes Meßresultat an den Input eines Neural Net angelegt wird.

2. Verfahren nach Anspruch 1, bei welchem mehrere Meßwerte $R_i$ der gleichen physikalisch nachweisbaren Meßgröße X zu unterschiedlichen Meßzeitpunkten ($t_i = t_1, t_2, ..., t_n$) gemessen und mindestens ein Teil der insgesamt eine zeitabhängige Änderung der Meßgröße X beschreibenden Meßwerte $R_i(t_i)$ gleichzeitig an den Input des Neural Net angelegt werden.

3. Verfahren nach einem der Ansprüche 1 oder 2, bei welchem mehrere Meßwerte $R_i$ der gleichen physikalisch nachweisbaren Meßgröße zu unterschiedlichen Meßzeitpunkten ($t_i = t_1, t_2, ..., t_n$) gemessen, daraus mindestens ein aus jeweils mindestens zwei Meßwerten abgeleitetes Meßresultat bestimmt und das mindestens eine abgeleitete Meßresultat an den Input des Neural Net angelegt wird.

4. Verfahren nach einem der vorhergehenden Ansprüche, bei welchem in dem Neural Net-Training ein selbstorganisierendes Neural Net verwendet wird.

5. Verfahren nach einem der Ansprüche 1 bis 3, bei welchem in dem Neural Net-Training jeweils beim Anlegen des mindestens einen Meßwertes oder Meßresultats für eine Standardprobe das bekannte analytische Resultat A oder eine bekannte mit dem analytischen Resultat verknüpfte Hilfsgröße an den Output des Neural Net angelegt wird.

6. Verfahren nach einem der vorhergehenden Ansprüche, bei welchem das analytische Resultat A die Konzentration C eines Bestandteils der Probe ist.

7. Verfahren nach Anspruch 6, bei welchem das Ergebnis des Neural Net-Trainings als Kalibration zur Bestimmung der Konzentration C aus dem mindestens einen Meßwertes R verwendet wird.

8. Verfahren nach Anspruch 6 oder 7, bei welchem das Ergebnis des Neural Net-Trainings verwendet wird, um den Meßbereich der Analyse über den durch Standards abgedeckten Konzentrationsbereich hinaus zu erweitern.

9. Verfahren nach Anspruch 6, bei welchem die Konzentration C mit einer aus der zeitabhängigen Änderung des Meßwertes R(t) abgeleiteten Kalibrations-Eingangsvariablen Y korreliert, wobei die Kalibrationskurve Y=f(C) nicht monoton ist, so daß der gleiche Wert der Eingangsvariablen Y auf mindestens zwei Teilbereichen der Kalibrationskurve unterschiedlichen Werten der Konzentration C entspricht, und das Ergebnis des Neural Net-Trainings zur Zuordnung der aus R(t) bestimmten Eingangsvariablen Y zu einem Teilbereich der Kalibrationskurve verwendet wird.

10. Verfahren nach einem der Ansprüche 1 bis 5, bei welchem das analytische Resultat A die Zuordnung der Probe zu einem von mindestens zwei unterschiedlichen medizinisch-analytischen Zuständen ist und das Ergebnis des Neural Net-Trainings verwendet wird, um den mindestens einen Meßwert R den unterschiedlichen medizinisch analytischen Zuständen richtig zuzuordnen.

11. Verfahren nach einem der Ansprüche 1 bis 5, bei welchem das Ergebnis des Neural Net-Trainings zur Klassifizierung der Meßergebnisse in fehlerhafte und nichtfehlerhafte Meßergebnisse verwendet wird.

**12.** Verfahren nach einem der vorhergehenden Ansprüche, bei welchem das Neural Net-Training zumindest teilweise vom Hersteller des Reagenzsystems außerhalb des automatischen Analysegerätes durchgeführt wird.

**13.** Verfahren nach Anspruch 12, bei welchem das Neural Net-Training zwei Teilstufen umfaßt, von denen die erste Teilstufe vom Hersteller des Reagenzsystems und die zweite Teilstufe als Nachtraining an dem Analysegerät durchgeführt wird.

## Claims

**1.** Method for analysis of a component of a medical sample by means of an autoanalyser, in which a reaction of the sample with a reagent system is carried out and a physically measurable quantity X resulting from the reaction of the sample with the reagent system is measured in order to determine at least one measured value R for a specified sample and in which at least one measured value R is further processed by means of a processing unit in a processing stage in order to determine a correct analytical result A, where in the processing stage use is made of the results of a neural net training in which for a large number of standard samples for which the analytical result A is known at least one measured value or a measurement result derived from several measured values $R_i$ is applied to the input of a neural net.

**2.** Method according to claim 1, in which several measured values $R_i$ of the same physically measurable quantity X are measured at various measurement times ($t_i = t_1, t_2, \ldots, t_n$) and at least a part of all the measured values $R_i$ ($t_i$) describing a time-dependent alteration of the measurable quantity X is applied simultaneously to the input of the neural net.

**3.** Method according to claim 1 or 2, in which several measured values $R_i$ of the same physically measurable quantity are measured at various measurement times ($t_i = t_1, t_2, \ldots, t_n$), at least one measurement result derived from at least two measured values is determined from these and at least one derived measurement result is applied to the input of the neural net.

**4.** Method according to any one of the preceding claims, in which a self-organising neural net is used in the neural net training.

**5.** Method according to any one of claims 1 to 3, in which the known analytical result A or a known auxiliary value linked to the analytical result is applied to the output of the neural net during the neural net training whenever at least one measured value or measurement result is applied for a standard sample.

**6.** Method according to any one of the preceding claims, in which the analytical result A is the concentration C of a component of the sample.

**7.** Method according to claim 6, in which the result of the neural net training is used as calibration for determination of the concentration C from at least one measured value R.

**8.** Method according to claim 6 or 7, in which the result of the neural net training is used to extend the measurement range of the analysis beyond the concentration range covered by standards.

**9.** Method according to claim 6, in which the concentration C correlates with a calibration input variable Y derived from the time-dependent alteration of the measured value R(t), where the calibration curve Y = f(C) is non-monotonous, so that the same value of the input variable Y corresponds to different values of the concentration C in at least two subsections of the calibration curve, and the result of the neural net training is used for assignment of an input variable Y determined from R(t) to a subsection of the calibration curve.

**10.** Method according to any one of claims 1 to 5, in which the analytical result A is the assignment of the sample to one of at least two different medico-analytical states and the result of the neural net training is used to assign at least one measured value R correctly to the various medico-analytical states.

**11.** Method according to any one of claims 1 to 5, in which the result of the neural net training is used for classification of the measurement results into erroneous and error-free measurement results.

**12.** Method according to any one of the preceding claims, in which at least part of the neural net training is carried out by the manufacturer of the reagent system independently of the autoanalyser.

**13.** Method according to claim 12, in which the neural net training comprises two substages, the first of which is carried out by the manufacturer of the reagent system and the second is carried out as further training on the autoanalyser.

**Revendications**

**1.** Procédé pour l'analyse d'un constituant d'un échantillon médical au moyen d'un appareil d'analyse automatique, dans lequel une réaction de l'échantillon est effectuée avec un système réactif et une grandeur de mesure X physiquement décelable résultant de la réaction de l'échantillon est mesurée avec le système réactif, afin de déterminer au moins une valeur de mesure R pour un échantillon défini, et dans lequel la - au moins une - valeur de mesure R est soumise à un traitement ultérieur au moyen d'une unité de traitement dans une étape de traitement, afin de déterminer un résultat analytique A correct, dans ladite étape de traitement étant utilisés les résultats d'un entraînement d'un réseau neuronal, dans lequel, pour une pluralité d'échantillons standard dont le résultat analytique A est connu, à chaque fois au moins une valeur de mesure ou un résultat de mesure déduit de plusieurs valeurs de mesure $R_i$ est appliqué à l'entrée d'un réseau neuronal.

**2.** Procédé selon la revendication 1, dans lequel plusieurs valeurs de mesure $R_i$ de la même grandeur de mesure X physiquement décelable sont mesurées à différents instants de mesure ($t_i$, $= t_1$, $t_2$, ..., $t_n$) et au moins une partie des valeurs de mesure $R_i$ ($t_i$) décrivant une variation en fonction du temps de la grandeur de mesure X sont appliquées simultanément à l'entrée du réseau neuronal.

**3.** Procédé selon l'une des revendications 1 ou 2, dans lequel plusieurs valeurs de mesure $R_i$ de la même grandeur de mesure physiquement décelable sont mesurées à différents instants de mesure ($t_i$, $= t_1$, $t_2$, ..., $t_n$), un résultat de mesure déduit à chaque fois d'au moins deux valeurs de mesure est déterminé à partir desdites valeurs de mesure et le - au moins un - résultat de mesure déduit est appliqué à l'entrée du réseau neuronal.

**4.** Procédé selon l'une des revendications précédentes, dans lequel un réseau neuronal auto-organisateur est utilisé dans l'entraînement du réseau neuronal.

**5.** Procédé selon l'une des revendications 1 à 3, dans lequel, dans l'entraînement du réseau neuronal, à chaque fois à l'application de la - au moins une - valeur de mesure ou du résultat de mesure d'un échantillon standard, le résultat analytique A connu ou une grandeur auxiliaire connue associée au résultat analytique est appliquée à la sortie du réseau neuronal.

**6.** Procédé selon l'une des revendications précédentes, dans lequel le résultat analytique A est la concentration C d'un constituant de l'échantillon.

**7.** Procédé selon la revendication 6, dans lequel le résultat de l'entraînement du réseau neuronal est utilisé comme calibration pour déterminer la concentration C à partir de la - au moins une - valeur de mesure R.

**8.** Procédé selon la revendication 6 ou 7, dans lequel le résultat de l'entraînement du réseau neuronal est utilisé pour étendre le champ de mesure de l'analyse au-delà de la gamme de concentration couverte par des standards.

**9.** Procédé selon la revendication 6, dans lequel la concentration C est corrélée avec une variable d'entrée Y de calibration déduite de la variation en fonction du temps de la valeur de mesure R(t), la courbe de calibration Y=f (C) n'étant pas monotone, de sorte que la même valeur de la variable d'entrée Y correspond à différentes valeurs de la concentration C sur au moins deux parties de la courbe de calibration, et le résultat de l'entraînement du réseau neuronal est utilisé pour attribuer la variable d'entrée Y déterminée à partir de R(t) à une partie de la courbe de calibration.

**10.** Procédé selon l'une des revendications 1 à 5, dans lequel le résultat analytique A est l'attribution de l'échantillon à l'un d'au moins deux états médico-analytiques différents et le résultat de l'entraînement du réseau neuronal est utilisé pour attribuer correctement la - au moins une - valeur de mesure R auxdits états médico-analytiques différents.

**11.** Procédé selon l'une des revendications 1 à 5, dans lequel le résultat de l'entraînement du réseau neuronal est utilisé pour classer les résultats de mesure en résultats de mesure erronés et non erronés.

**12.** Procédé selon l'une des revendications précédentes, dans lequel l'entraînement du réseau neuronal est effectué au moins partiellement par le fabricant du système réactif en dehors de l'appareil d'analyse automatique.

**13.** Procédé selon la revendication 12, dans lequel l'entraînement du réseau neuronal comprend deux sous-étapes, la première sous-étape étant réalisée par le fabricant du système réactif et la deuxième sous-étape comme post-entraînement, sur l'appareil d'analyse.

Fig. 1

Fig. 2

Fig. 3

Fig. 4

Hidden

In

Out

Fig. 5

Fig. 6

Fig. 7

Fig. 8

Fig. 9

Fig. 10